**Europäisches Patentamt**

**European Patent Office**

**Office européen des brevets**

(19)

(11) Veröffentlichungsnummer: **0 148 406 B1**

(12) **EUROPÄISCHE PATENTSCHRIFT**

(45) Veröffentlichungstag der Patentschrift:
**22.03.89**

(51) Int. Cl.⁴: **H 04 M 11/08, H 04 M 11/06**

(21) Anmeldenummer: **84114698.8**

(22) Anmeldetag: **03.12.84**

(54) Telefoneinrichtung mit einem Teilnehmergerät zum Abfragen von Informationen, Eingeben von Antworten und zum Erzeugen von Nachrichten digitalcodierter Art.

(30) Priorität: **24.12.83 DE 3347047**

(43) Veröffentlichungstag der Anmeldung:
**17.07.85 Patentblatt 85/29**

(45) Bekanntmachung des Hinweises auf die Patenterteilung:
**22.03.89 Patentblatt 89/12**

(84) Benannte Vertragsstaaten:
**AT BE CH DE FR GB IT LI NL SE**

(56) Entgegenhaltungen:
**DE-A- 2 823 283
DE-B- 2 814 837
DE-B- 2 850 252
DE-C- 2 842 776**

**TELCOM REPORT, 3. Jahrgang, Heft 2, April 1980, München, Deutschland. D. ARBENZ: "EMS - das zukunftssichere Vermittlungssystem für die Bürokommunikation", Seiten 89-92
TELCOM REPORT, 5. Jahrgang, Heft 4, August 1982, München, Deutschland. F. BRUNNER: "Ferninformieren mit Informationsgeräten für den Bildschirmtextdienst", Seiten 231-235**

(73) Patentinhaber: **LOEWE OPTA GMBH,
Industriestrasse 11 Postfach 220, D-8640 Kronach (DE)**

(72) Erfinder: **Missbach, Hilmar, Dipl.-Ing., Neuengrün 24a,
D-8641 Wallenfels (DE)**

## Beschreibung

Die Erfindung betrifft eine Telefoneinrichtung mit einem Teilnehmergerät zum Abfragen von Informationen, zum Eingeben von Antworten und zum Erzeugen von Nachrichten digitalcodierter Art für einen technischen Textkommunikationsdienst, bei welchem die Textdaten mit einem NF-Träger moduliert über Fernsprechleitungen übertragen werden, mit einem oder mehreren Telefonanschlüssen in Verbindung mit einem Fernsprechapparat, über den parallel zum Textkommunikationsbetrieb über eine gemeinsame Leitung Telefongespräche führbar sind.

Die Deutsche Bundespost unterhält allein oder im Verbund mit anderen Organisationen im In- und Ausland verschiedene Datendienste im Rahmen der technischen Kommunikation, die der Übermittlung von Informationen zwischen Teilnehmern oder von einem Teilnehmer zu einem Rechner unter Benutzung des öffentlichen Fernsprechwähl-, des Direktruf- oder Datennetzes dienen. Einer dieser technischen Kommunikationsdienste ist der Bildschirmtextdienst, dessen System es ermöglicht, daß Teilnehmer über das schmalbandige Fernsprechnetz mit einer Bildschirmtextzentrale korrespondieren können. An die Stelle einer solchen Bildschirmtextzentrale können auch ein Rechner oder eine Datenbank treten (externe Rechner). Der Teilnehmer kann die gewünschten Informationen von der Zentrale abrufen oder als Anbieter solche in diesen eingeben.

Darüber hinaus ist es möglich, über die Bildschirmtextzentrale weitere öffentliche und private Bildschirmtext- sowie Inhousezentralen anzuschalten. Eine private Zentrale kann z.B. ein externer Rechner eines Versandkaufhauses sein, dessen Katalogseiten abrufbar und bei dem in Bestellseiten Bestellungen eingebbar sind.

Die Technik der Bildschirmtextzentralen ist beispielsweise aus der DE-B-2 850 252 und deren Zusatzanmeldung DE-B-2 914 665 bekannt. Bei den Bildschirmtextzentralen handelt es sich um rechnergesteuerte Vermittlungs- und Speichereinheiten, deren Anschlußeinheiten zu den anderen Zentralen oft mit zusätzlichen Mikroprozessoren und Speichern ausgerüstet sind.

Das Fernsprechnetz ist in bekannter Weise nur für die Übertragung von NF-Frequenzen im schmalbandigen Bereich ausgelegt. Digitalcodierte Daten, wie sie zur Darstellung von Bildschirmtextseiten oder Textdarstellungen im allgemeinen auf einem Bildschirm benötigt werden, können bei gleichzeitiger Gewährleistung des Netzbetriebes für den Fernsprechverkehr nicht übertragen werden. Aus diesem Grunde ist das öffentliche Fernsprechnetz teilnehmerseitig mit einem Datenübertragungsgerät abgeschlossen, das als Modulator und Demodulator (Modem) arbeitet. Dieses Modem schafft die Voraussetzung, daß die Übertragungswege eines Fernsprechnetzes für die Datenübertragung benutzt werden können. Die digitalen Daten werden in beliebiger Seriencodierung von der Datenendeinrichtung beim Bildschirmtextdienst an das Teilnehmergerät geliefert, das mit dem Modem über Schnittstellenleitungen verbunden ist. Das Modem wandelt die seriellen Gleichstrombinärsignale, die von einem Teilnehmergerät abkommen, in frequenzmodulierte NF-Signale um. Die Signale werden über die Fernsprechleitung zur Bildschirmtextzentrale oder zum Rechner übertragen. Im Modem der Gegenstelle werden sie demoduliert und die so wieder zurückgewonnenen digitalen Gleichstromsignale an die korrespondierende Datenendeinrichtung weitergeleitet. Die maximale Datenübertragungsgeschwindigkeit auf den Fernsprechleitungen mit üblicher Bandbreite von 300 Hz bis 3400 Hz ist 1200 b/s. Bei Bildschirmtextdienst sind Datenübertragungsgeschwindigkeiten von 75 b/s vom Teilnehmergerät zur Bildschirmtextzentrale ebenfalls üblich.

Das für den Bildschirmtextdienst vorrangig eingesetzte Datenübertragungsgerät «Teilnehmermodem DBT 03» – FTZ-Publikation 11813PFL2 – weist darüber hinaus eine Wähleinrichtung für den automatischen Aufbau von Datenverbindungen zwischen dem Teilnehmergerät und der korrespondierenden Datenendeinrichtung über das Fernsprechwählnetz auf. Derartige Wähleinrichtungen sind beispielsweise beschrieben in «Vorläufige Informationen über die automatische Wähleinrichtung für Datenverbindungen (AWD)» der DBP, Technische Vorschriften B 5 und der Empfehlung V 25 von CCITT. Danach wird die AWD von der angeschlossenen Dateneinrichtung (Teilnehmerendgerät) gesteuert, bzw. die AWD gibt Meldungen an das Teilnehmerendgerät zurück. Die möglichen Schnittstellenleitungen zwischen AWD und DEE sind in den CCITT-Empfehlungen V 24, V 25 und V 28 bzw. im Normenblatt DIN 66 020 beschrieben. Von der AWD werden in Verbindung mit dem zugehörigen Modem folgende Aufgaben durchgeführt:

– Belegen der Fernsprechanschlußleitung
– Beobachten und Auswerten des Wähltones
– Wählen der Rufnummer des gewünschten Teilnehmers
– Beobachten und Auswerten der Antworttöne
– Übergeben der hergestellten Verbindung an das Modem
– Freigeben der Fernsprechanschlußleitung bei erfolgter Wahl.

Darüber hinaus wird beim Bildschirmtextsystem automatisch vom Modem eine Teilnehmerkennung ausgegeben, wenn die Verbindungsleitung hergestellt ist. Ist die Verbindung zwischen anrufendem Teilnehmergerät und der Bildschirmtextzentrale hergestellt, so gibt diese eine Antworttonkennung aus und signalisiert damit, daß das Modem für die Datenübertragung freigeschaltet werden kann. Für die Antwort Tonkennung wird von der angewählten Bildschirmtextzentrale ein Trägersignal ausgegeben. Betätigt nun der Anrufende eine Datentaste am Teilnehmergerät bzw. gibt er an das Modem ein Schaltsignal ab, so wird das Modem für den Duplexbetrieb endgültig freigeschaltet.

Ein Modem mit einer Wähleinrichtung ist z.B. in der DE-C-2 842 776 beschrieben. Die Datenendeinrichtung, die mit einem solchen Modem verbunden ist, weist bekanntlich eine Datensendeleitung, eine Dateneingabeleitung und eine Steuerleitung auf. Die drei Anschlüsse sind mit teilnehmerseitig vorgesehenen Anschlüssen des Modems verbunden. Amtsseitig ist das Modem an die Fernsprechleitung angeschaltet.

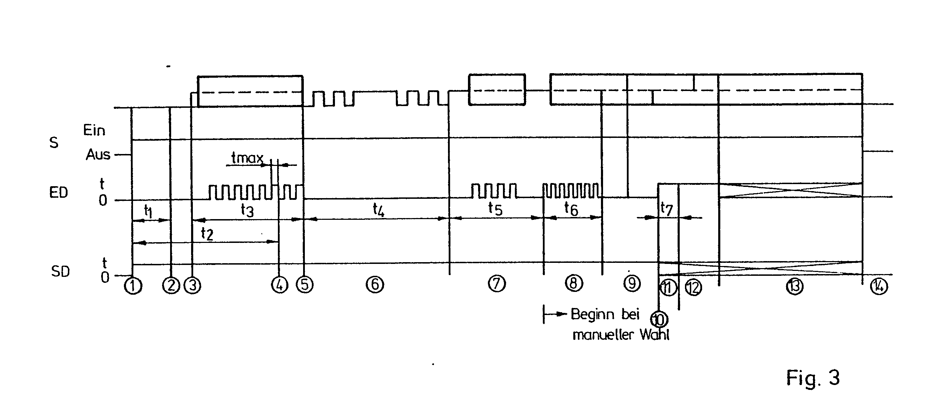

Der Signalablauf an der Schnittstelle des DBT 03 als beispielhaft für andere Modems gleicher Grundkonzeption wird anhand des in Fig. 3 dargestellten Impulsdiagramms näher erläutert.

1. DBT ist abgeschaltet; S und SD gehen in den «Ein-Zustand»

2. Nach $t_1 = 1,5 \ldots 4$ s wird das DBT an die nicht belegte Fernsprechleitung geschaltet

3. Es fließt Speisestrom (kann mit 2 zusammenfallen)

4. $t_2 = 4,2 \ldots 4,4$ s Auswertzeit des Dekoders
a) $t_{max} > 200$ ms für $t < t_2$: Teilnehmer spricht falls
a) nicht:
b) $t_{max} > 0,5$ ms für $t > t_2$: DBT ist angeschaltet

5. $3,2$ s $< t_3 < 5$ s Signale entsprechend Hörtönen auf ED

6. Aussenden der Wählziffern; $t_4$ unabhängig von der Rufnummer

7. Verarbeitungszeit der Wählvermittlung; Freiton (kann auch entfallen) ggf. Besetztton auf ED

8. $t_6 = 1,6$ bis $1,7$ s Ansprechzeit für 1300 Hz-Antworttonerkennung

9. Bis das Zeichen «NUL» erkannt wird, wird ED auf «NUL-Polarität» gehalten

10. Zeichen «NUL» erkannt

11. $200$ ms $< t_7 < 400$ ms Auswertzeit des Dekoders für aufgebaute Verbindung

12. Teilnehmeridentifizierung

13. Datenverkehr

14. Ruhezustand: DBT ist wieder abgeschaltet.

Der Bildschirmtextdienst und auch andere Datensysteme ermöglichen jedoch nicht nur den Datenverkehr über das Fernsprechwählnetz sondern gestatten darüber hinaus einen Inhouse-Datenverkehr. Die bestehenden Konzeptionen für ein solches Inhouse-System sehen stets eine Inhouse-Zentrale vor, die vergleichbar der Bildschirmtextzentrale arbeitet. Die über das Nebenstellentelefonnetz innerbetrieblich angeschlossenen Nebenstellen haben dabei Zugang zu der betrieblichen Datenbank, die in Verbindung mit der Nebenstellenanlage ebenfalls eine rechnergesteuerte Vermittlungs- und Speichereinheit bildet. Das Nebenstellentelefonnetz wird hierbei jedoch nicht für Datentransport genutzt. Dieser erfolgt über separate Datenleitungen. Durch interne Codewörter wird der Autorisierungsgrad der Benutzer festgelegt. Außerdem besteht die Möglichkeit des Zugriffs über den vorgesehenen Amtsanschluß an das öffentliche Btx-Netz.

Der vorliegenden Erfindung liegt, ausgehend vom vorgenannten Stand der Technik, die Aufgabe zugrunde, ein Teilnehmergerät so auszubilden, daß der Datenverkehr im Inhouseverkehr über vorhandene Sprechleitungen möglich ist, ohne daß zusätzliche Leitungen vorgesehen werden müssen, und sichergestellt ist, daß die Nebenstelle, die durch das Teilnehmergerät gebildet wird, über einen zugeordneten Fernsprechapparat zum Führen von Telefongesprächen mitgenutzt werden kann, ohne daß in der Nebenstellenanlage spezielle Vermittlungseinrichtungen für das Btx-Netz vorhanden sein müssen, und ohne daß eine zentrale Inhouse-Btx-Zentrale als Speichereinheit zum Eingeben und Abrufen von Darstellungsleiten errichtet werden muß. Ferner sollen die Teilnehmergeräte so ausgebildet sein, daß ein Datenverkehr zwischen den im Inhouse-System miteinander verbundenen Teilnehmern im Duplexbetrieb ermöglicht wird. Darüber hinaus soll die Möglichkeit bestehen, daß der Teilnehmer sowohl als Anbieter als auch als Endteilnehmer mit der öffentlichen Bildschirmtextzentrale in Korrespondenz treten kann.

Die Aufgabe wird erfindungsgemäß nach der im Patentanspruch 1 wiedergegebenen technischen Lehre gelöst.

Der Anschluß des Teilnehmergerätes und des zugeordneten Telefonsprechapparates erfolgt über eine gemeinsame Sprechleitung, so daß im Inhouse-Verkehr über eine Nebenstellenanlage mit einem anderen Teilnehmer entweder ein Telefongespräch oder der Datenverkehr geführt werden kann. Damit ein Datendialogverkehr im Duplexbetrieb ohne Bildschirmtext-Inhouse-Zentrale führbar ist, ist erfindungsgemäss ein Schalter vorgesehen, der die Sprechleitung nach Beendigung eines Telefongespräches stets an das im Teilnehmergerät integrierte Modem anschaltet. Im Datenübertragungsgerät D 1200 S, wie es von der Deutschen Bundespost für den Datenfernverkehr vorgesehen ist, ist ein Schalter mit implementiert, der jedoch nach Beendigung des Datenverkehrs stets die Sprechleitung an den Telefonapparat anschließt, damit für eine erneute Datenübertragung zu einem anderen Teilnehmer hin eine Verbindungsleitung aufgebaut werden kann. Beim Erfindungsgegenstand hingegen kann ein Teilnehmer mit dem anderen sofort nach Verbindungsaufbau durch Anwahl des Teilnehmers über die Nebenstellenanlage in den Datenverkehr übergehen. Mit dem Abheben des Hörers bei freier Leitung, d.h. wenn ein Freiton anliegt, wird der Schalter durch den Schleifenstrom oder durch ein gesondert ausgegebenes Steuersignal so umgeschaltet, daß ein normales Telefongespräch geführt bzw. eine Verbindung zu einem anderen Teilnehmer oder Datengerät hergestellt werden kann. Nach der Erfindung werden somit im Inhouse-System keine binär codierten Gleichstromimpulse übertragen sondern NF-modulierte serielle Signale, wie sie für den Datentransfer über die Fernleitung vorgesehen sind.

Die Wähleinrichtung ist nach Patentanspruch 2 im Teilnehmergerät mit integriert, was in Bezug auf die bauliche Ausführung und Mehrfachnutzung vorhandener Prozessoren zu einer Vereinfachung der Architektur der Geräte und zu einer Kostenoptimierung führt.

Die Anschaltung des Fernsprechapparates oder des Datenteilnehmergerätes an das Sprechnetz ist in vorteilhafter Ausführung in den Unteransprüchen 3 und 4 beschrieben.

Will ein Teilnehmer des Bildschirmtextdienstes Informationen von der Bildschirmtextzentrale abrufen oder als Anbieter solche in diese eingeben, so ist es erforderlich, daß er über die hausinterne Telefonzentrale an die Amtsleitung angeschlossen wird, die mit einem Datenübertragungsgerät amtsseitig abgeschlossen ist. Ein solches Datenübertragungsgerät (Modem DBT 03) ist eingangs beschrieben. Es weist teilnehmerseitig drei Anschlüsse auf und ist über eine Amtsleitung mit dem Fernmeldeamt bzw. darüber mit der Btx-Zentrale verbindbar. Die Erfindung sieht nun in einfacher Weise vor, daß nach Patentanspruch 5 zwischen der Telefonzentrale und dem die Fernmeldeleitung abschließenden Modem ein weiteres Datenübertragungsgerät vorgesehen ist, das einerseits die von dem Inhouse-Teilnehmer ankommenden NF-modulierten Signale demoduliert und andererseits die von der Amtsseite anliegenden binär codierten Signale moduliert. Dieses zusätzliche Modem benötigt als reine Demodulator/Modulator-Schaltung keine Intelligenz und führt nur Transportfunktionen aus. Soll die Verbindung hergestellt werden, so muß der die Nebenstelle bedienende Teilnehmer zunächst die Nummer des zusätzlichen Datenübertragungsgerätes anwählen – möglich, wenn frei –, das praktisch als Nebenstelle anzusehen ist. Die Telefonzentrale stellt in bekannter Weise die Verbindung her. Das Teilnehmergerät gibt dann über seinen Steuerleitungsausgang entweder selbsttätig oder in Abhängigkeit von einem bei Betätigung einer Datentaste am Teilnehmergerät ausgegebenen Trägers ein Steuersignal – wie im Vorspann beschrieben – an das Modem ab, das die Amtsleitung abschließt. Mit der Ausgabe des Steuersignals wird die Wähleinrichtung im amtsseitig vorgesehenen Modem eingeschaltet und die Verbindung zur Btx-Zentrale über das Fernmeldeamt automatisch hergestellt. In gleicher Weise werden auch die Kennziffern und sonstigen Nummern, die in dem Modem implementiert sind, ausgegeben. Nach Antworttonkennung wird die Leitung für den Datentransfer freigeschaltet, so daß die über die Datensendeleitung vom zusätzlichen Modem ausgehenden Daten an die Btx-Zentrale ausgegeben bzw. die von der Btx-Zentrale oder einem externen Rechner ankommenden Daten nach der Demodulation an der Dateneingangsleitung des zusätzlichen Modems abgenommen und von diesem moduliert werden.

Der Einsatz eines zusätzlichen Modems, das dem amtsseitigen Modem vorgeschaltet ist, ist nicht nur in Verbindung mit einer Nebenstellenanlage von Vorteil sondern auch in Verbindung mit Einzelanlagen. Ohne zusätzliche Leitungen kann anstelle eines Fernsprechapparates ein Teilnehmergerät installiert werden.

Das Teilnehmergerät kann ferner zu einem späteren Zeitpunkt in einer Nebenstellenanlage betrieben werden. Auch ist in einem Gebäude, in dem eine Sprechleitung zur Verfügung steht ein Teilnehmergerät nachträglich anschließbar. Für den Fall der Möglichkeit des parallelen Telefonsprechverkehrs müßte jedoch ein zweiter Hauptanschluß oder vor dem amtsseitigen Modem ein vom Telefonsprechapparat aus gesteuerter Umschalter vorgesehen sein, der zwangsweise stets die Sprechleitung mit dem Telefonapparat verbindet und nur im Falle des Datenverkehrs umschaltet. Wird an dieser Stelle ein Modem D 1200 S verwendet, so ist dies zwangsläufig gegeben, so daß für diesen Fall mit einer einzigen Sprechleitung sowohl der Daten- als auch der Telefonsprechverkehr über einen Amtsleitungsanschluß nach der Erfindung möglich ist.

Weitere vorteilhafte Ausbildungen der Erfindung sind in den Unteransprüchen beschrieben.

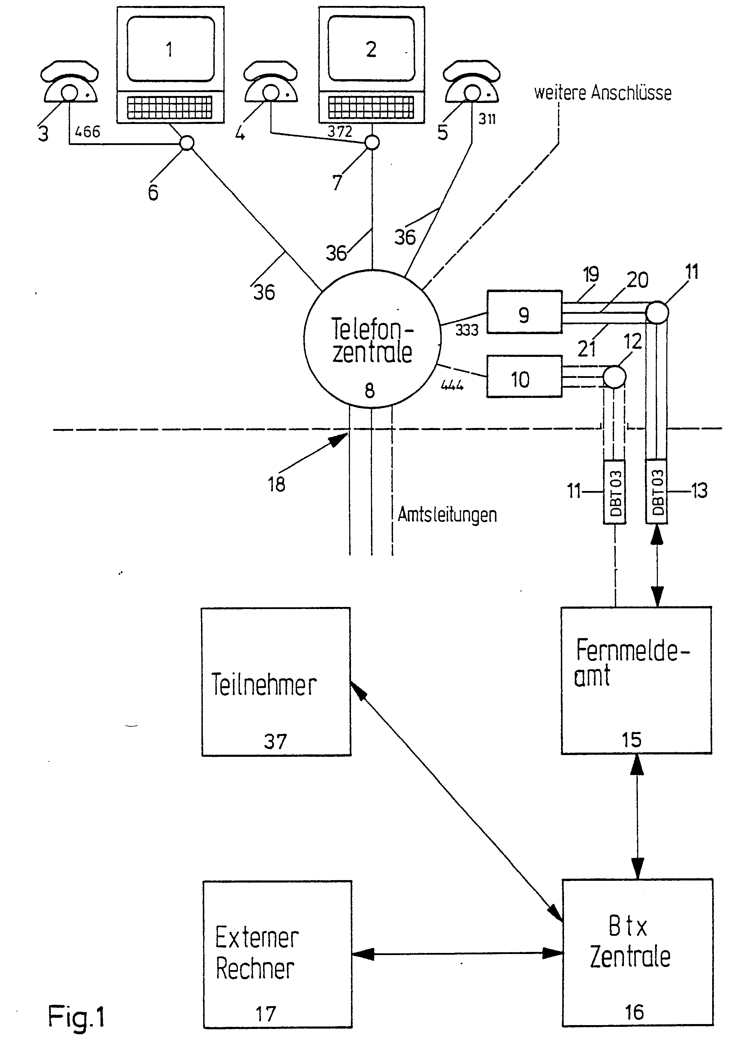

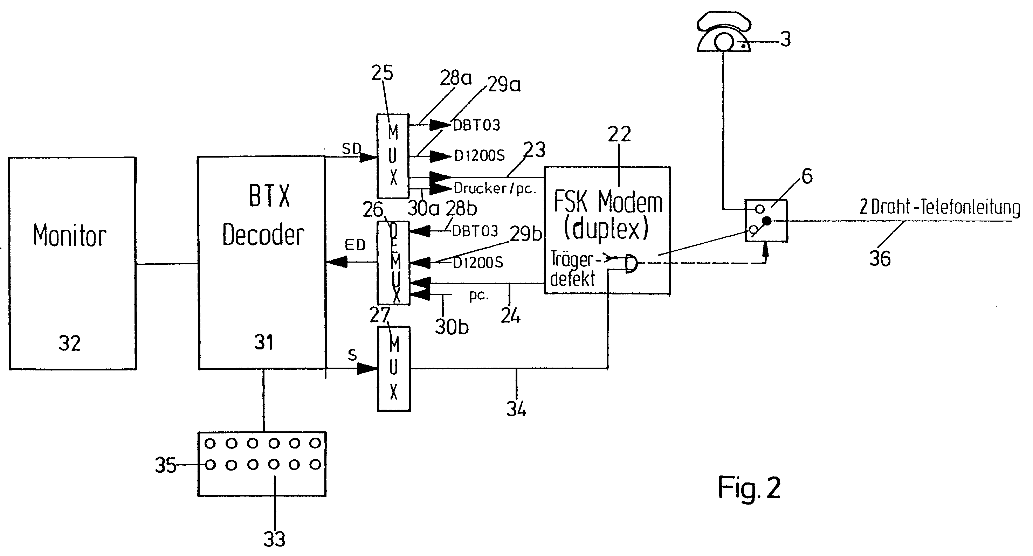

Die Erfindung wird nachfolgend anhand der Fig. 1 und 2 näher erläutert.

In Fig. 1 ist in Form eines Blockschaltbildes eine Telefoneinrichtung nach der Erfindung im Verbund mit einem Fernsprechnetz dargestellt. Den Teilnehmergeräten 1 und 2, die Monitore mit integrierten Bildschirmtextdecodern und Übertragungsgeräten sind, sind Umschalter 6 und 7 vorgeschaltet, mit denen über Sprechleitungen je ein Fernsprechapparat 3 und 4 verbindbar ist. Die Sprechleitungen, die zu einer Telefonzentrale 8 führen, sind mit dem Bezugszeichen 36 gekennzeichnet. Je nach Aufbau der Nebenstellenanlage sind weitere Anschlüsse z.B. für reine Telefonnebenstellenapparate 5 vorgesehen. Es können jedoch auch weitere Bildschirmtextteilnehmergeräte an die Anschlüsse angeschlossen werden. Dem Fernsprechapparat 3 ist die Rufnummer 466, dem Fernsprechapparat 4 die Rufnummer 372 und dem Fernsprechapparat 5 die Rufnummer 311 zugeordnet. Der Verbindungsaufbau erfolgt in bekannter Weise durch Anwahl eines Teilnehmers vom Anrufenden durch die von der Wähleinrichtung des Fernsprechapparates ausgegebenen Wählimpulse. Der Fernsprechapparat mit Wähleinrichtung kann selbstverständlich auch in dem Teilnehmergerät mit integriert sein. Die Nebenstelle 466, bestehend aus Teilnehmergerät 1 und dem Fernsprechapparat 3, kann mit der Nebenstelle 372, mit dem Teilnehmergerät 2 und dem Fernsprechapparat 4 durch die Anwahl der Nebenstellennummer über die Telefonzentrale verbunden werden.

Im Darstellungsbeispiel ist die Schnittstelle 18 als Schnittstelle zu dem Fernmeldesprechnetz der Bundespost anzusehen. An dieser Schnittstelle liegen die Sprechleitungen des amtlichen Fernsprechnetzes. Parallel zu den Amtsanschlüssen für die Sprechleitungen sind weitere vorgesehen, die durch ein Datenübertragungsgerät, Modem DBT 03, abgeschlossen sind. Die Datenübertragungsgeräte sind mit 11 und 13 bezeichnet. Sie entsprechen den Bedingungen, die an Datenübertragungsgeräte für den Bildschirmtextdienst gestellt sind und weisen intern eine Wähleinrichtung und eine Kennziffernspeicherung auf. Die Anwahl wird ausgelöst durch einen Steuerbefehl. Bei freier Fernmeldeleitung wird die Verbindung über das Fernmeldeamt 15 zu der angerufenen Btx-Zentrale 16 bzw. einem externen Rechner 17 hergestellt. Mit der Bildschirmtextzentrale sind weitere Teilnehmer 37 verbunden. Die Wirkungsweise und die Funktion der hier zum Einsatz gelangenden Modems DBT 03 sind in der Beschreibungseinleitung bereits beschrieben. Als Hausanschluß befinden sich neben den Anschlüssen für die Sprechleitungen des Amtsnetzes die für den Datenverkehr vorgesehenen Amtsleitungsanschlüsse, die durch die Steckdosen 11 und 12 symbolisiert sind. Zwischen der Telefonzentrale 8 und den Datenübertragungsgeräten 11 und 13 sind weitere Modems 9 und 10 zwischengeschaltet. Das Modem 10 ist als Erweiterungsmodem vorgesehen. Aus diesem Grunde sind die Leitungen gestrichelt gezeichnet. Dasselbe trifft für das amtsseitig vorgesehene Modem 11 zu. Das Modem 9 ist über die Rufnummer 333 erreichbar, das Modem 10 über die Rufnummer 444. Wird von einer Nebenstelle eine dieser beiden Nummern angewählt, z. B. die Nummer 333, und ist die Leitung unbelegt, d. h. ein Freiton hörbar, so wird das Modem 9 mit der anrufenden Nebenstelle, z. B. der Nebenstelle 466, verbunden. Zum Zwecke des Anrufens wird der Hörer vom Telefonapparat 3 abgenommen. Hierbei schaltet der Umschalter 6 die Sprechleitung an den Fernsprechapparat an, so daß die Wählimpulse ausgegeben werden können. Sobald der Verbindungsaufbau zum Modem 9 hergestellt ist, wird eine Datentaste am Teilnehmergerät 1 betätigt, die einen Träger aussendet, mit dem die Daten der technischen Kommunikation seriell moduliert übertragen werden. Das Modem 9 erzeugt in Abhängigkeit dieses Trägers zunächst ein Steuersignal, das über den Steuereingang 21 das DBT 03 ansteuert, so daß dieses die Btx-Zentrale anwählt und die Kennziffer des Teilnehmers ausgibt. Sobald eine Rückmeldung von der DEE durch Abgabe eines Trägers vorliegt, schaltet das DBT 13 die Datenleitungen in den Duplexbetrieb. Die nunmehr von der Nebenstelle 466 nach Datenaufbau eingegebenen Daten werden nach der Demodulation über die Sendedatenleitung an das DBT 03 durchgeschaltet und von diesem moduliert über das Fernmeldeamt an die Btx-Zentrale 16 abgeschickt. Die von der Btx-Zentrale abgerufenen Daten gelangen trägermoduliert an das DBT 03 und werden nach der Demodulation als Binärsignale über die Dateneingangsleitung 20 dem hausinternen Modem zugeführt und nach Modulation der anrufenden Nebenstelle 466 zugeführt. Der Umschalter 6 schaltet bei Aufnahme des Betriebes der Datenübertragung durch Betätigung der Steuertaste in Abhängigkeit des damit abgegebenen Steuersignals das Teilnehmergerät mit seinem integrierten Bildschirmtextdecoder an die Sprechleitung 36 an. Die Korrespondenz mit der externen Bildschirmtextzentrale erfolgt in der beschriebenen Weise. Nach Beendigung der Datenübertragung ist eine Zwangsschaltung vorgesehen, die den Umschalter 6 in der Stellung «Datenübertragung» festhält und damit das Teilnehmerendgerät zum Empfang und zum Aussenden von Daten bereithält. Somit ist es möglich, z. B. mittels der Nebenstelle 372 die Nebenstelle 466 anzurufen. Wird dabei kein durch Betätigung einer Datentaste am Teilnehmergerät 2 erzeugter Träger ausgesendet, so schaltet der Umschalter 6 nach einer Verzögerungszeit auf den Sprechapparat 3 um, so daß der Wecker dieses Apparates läutet. Wird hingegen während der Zwischenzeit nach Aufbau der Leitungsverbindung durch Betätigung einer Datentaste am Teilnehmergerät 2 ein Träger erzeugt, so bleibt der Schalter 6 im zwangsweise eingenommenen Status der Datenübertragung, wobei die Fernsprechleitung mit dem Teilnehmergerät 1 verbunden ist und ein Datentransfer sowohl in der einen Richtung als auch in der anderen Richtung möglich ist. Z. B. kann mit dem Teilnehmergerät 1 ein Festwertspeicher verbunden sein, der alle von der Nebenstelle 372 übertragenen Daten abspeichert. Die Daten können dann zum späteren Zeitpunkt von dem Festwertspeicher abgerufen und auf dem Monitor des Teilnehmergerätes 1 angezeigt werden.

Durch die erfindungsgemäße Konfiguration ist ein Inhouse-Btx-Betrieb möglich, ohne daß hierfür eine gesonderte Bildschirmtextzentrale vorgesehen sein muß. Desgleichen kann aber auch jede der Nebenstellen über den vorgesehenen Amtsleitungsanschluß für den Datenbetrieb mit der Btx-Zentrale in Korrespondenz treten. Das Modem 9 bzw. das Modem 10, das zusätzlich vorgesehen ist, dient lediglich zum Datentransport. Es besitzt keine eigenständige Intelligenz, wie Wähleinrichtungen und dergleichen. Diese sind im posteigenen Modem untergebracht.

In Fig. 2 ist ein Teilnehmergerät im Detail dargestellt. Das Teilnehmergerät, z. B. jenes der Nebenstelle 466, besteht aus einem Monitor 32, auf dem die Bildschirmtextdaten dargestellt werden, einem Bildschirmtextdecoder 31, der die ankommenden Daten nach Leistungsmerkmalen abarbeitet und sie in RGB-Signale zur Anzeige umwandelt. Der Bildschirmtextdecoder 31 ist über eine Datensende- und eine Datenempfangsleitung sowie über eine Steuerleitung unter Zuordnung entsprechender Multiplexschaltungen 25, 26, 27 über die Leitungen 34, 23 und 24 mit dem FSK-Modem 22 verbunden. Die Duplexschaltungen sind vorgesehen, um das Teilnehmergerät unabhängig vom Modem 22 mit weiteren Amtsleitungsanschlüssen direkt verbinden zu können. Zu diesem Zweck sind Ausgänge und Eingänge 28a und b und 29a und b sowie 30a und b vorgesehen. So ist z. B. der direkte Anschluß an ein DBT 03 möglich, so daß das Gerät auch als Einzelteilnehmergerät eingesetzt werden kann. Des weiteren ist für den Datentransport ein Anschluß an ein Modem D 1200 S vorgesehen und weitere Ein- und Ausgänge für Drucker und Personal Computer. Das Modem 22 ist in dem Gerät mit eingebaut, ebenso der Umschalter 6, der hier symbolisch dargestellt ist und an dem über einen zweiten Ausgang der Fernsprechapparat 3 angeschlossen ist. Der dritte Anschluß des Umschalters 6 ist mit der Zweidraht-Telefonleitung 36 verbunden, die entweder direkt an das Telefonnetz angeschlossen ist oder an eine Telefonzentrale 8 gemäß Fig. 1. Für die Datenein- und -ausgabe ist eine Tastatur 33 mit dem Btx-Decoder 31 verbunden. Auf der Tastatur befindet sich eine Datentaste 35, bei deren Betätigung ein Steuersignal über die Steuerleitung S an das Modem 22 ausgegeben wird. Sobald dieses Gleichstromsignal anliegt, wird der erzeugte Träger vom Modem 22 an den Umschalter abgegeben. Der Umschalter, der während der Anwahl infolge des Schleifenstroms über den Gabelkontakt den Fernsprechapparat an die Sprechleitung 36 anschließt, schaltet dann zwangsweise in die dargestellte Position um. Der Träger wird damit ausgegeben, so daß in dem Modem 9 und 10 (Fig. 1) eine Umsetzung in ein Steuersignal erfolgt und die Anwahl der Bildschirmtextzentrale über das amtsseitige Modem erfolgt. Wird die Verbindung zu einer gleichberechtigten Nebenstelle mit Teilnehmergerät hergestellt, so verharrt der Schalter, der stets in Ruhestellung die Fernsprechleitung mit dem Modem 22 verbindet, in dieser Position, es sei denn, daß nach einer Übergangszeit kein Träger ankommt, so daß sofort mit der Datenübertragung von einer Nebenstelle zur anderen begonnen werden kann. Die Zwischenschaltung einer Bildschirmtextzentrale, in der die Informationen abrufbar abgelegt werden, ist nicht erforderlich. Wird hingegen kein Träger ausgesendet, so ist für den Umschalter 6 erkennbar, daß ein Telefongespräch geführt werden soll. Der Umschalter schaltet dann die Fernsprechleitung an den Fernsprechapparat 3. Nach Beendigung des Telefongespräches schaltet der Schaltkontakt des Umschalters 6 jedoch zwangsweise wieder in die dargestellte Vorzugsstellung, so daß die Anlage mit dem Teilnehmergerät für den Datenbetrieb bereitgestellt ist.

## Patentansprüche

1. Telefoneinrichtung mit einem Teilnehmergerät (1, 2), zum Abfragen von Informationen, zum Eingeben von Antworten und zum Erzeugen von Nachrichten digitalcodierter Art für einen technischen Textkommunikationsdienst, bei welchem die Textdaten mit einem NF-Träger moduliert über Fernsprechleitungen (36), übertragen werden, mit einem oder mehreren Telefonanschlüssen in Verbindung mit einem Fernsprechapparat (3, 4), über den parallel zum Textkommunikationsbetrieb über weitere Leitungen oder anstelle des Textbetriebes über eine gemeinsame Leitung Telefongespräche führbar sind, dadurch gekennzeichnet, daß in dem Teilnehmergerät (1 oder 2) ein Datenübertragungsgerät (22) (Modem) implementiert oder mit diesem funktional verbunden ist und über mindestens eine Datensende- (23), eine Dateneingabe- (24) und eine Steuersignalleitung (34) mit einer Decodierschaltung (31) zur Aufbereitung der Daten für die visuelle Darstellung oder zum Editieren von Texten verbunden ist, welche Decoderschaltung (31) zur Vorbereitung des Datenübertragungsbetriebes ein Steuersignal bei Betätigen eines Funktionsstellers (35) über die Steuersignalleitung (34) abgibt, welches Datenübertragungsgerät (22) die digitalcodierten seriellen Gleichstrom-Binärsignale in frequenzmodulierte NF-Signale umwandelt und ausgibt bzw. von einer Bildschirmtextzentrale (16) oder von einem anderen Teilnehmer bzw. einer Datenbank, wie externer Rechner (17), ankommende frequenzmodulierte NF-Signale in serielle von der Decoderschaltung (31) für die Textdarstellung verarbeitbare Gleichstrom-Binärsignale umwandelt,

daß das Datenübertragungsgerät (22) über einen Umschalter (6) mit der Fernsprechleitung (36) verbunden ist, über den ein Fernsprechapparat (3 oder 4) mit einer Wähleinrichtung zum Aufbau einer Leitungsverbindung oder zum Führen eines Telefongespräches anschliessbar ist, welcher Umschalter (6) in Abhängigkeit von einem Schaltsignal (S), das spätestens mit dem Aussenden der Wählimpulse von der Wähleinrichtung ausgegeben wird, die Fernsprechleitung (36) mit dem Fernsprechapparat (3) verbindet, sofern die Sprechleitung (36) freigegeben ist und weder eine Sprech- noch Datenleitungsverbindung besteht,

daß der Schalter (6) nach dem Verbindungsaufbau durch ein vom Datenbetrieb abhängiges Steuersignal (Träger) zwangsweise umschaltbar ist und das Datenübertragungsgerät (22) mit der Telefonleitung (36) verbindet,

daß die während der Datenübertragung eingenommene Schaltstellung des Schalters (6) auch nach Beendigung der Datenübertragung bis zum erneuten Aufbau einer Verbindungsleitung aufrechterhalten bleibt, und daß bei Anruf durch einen anderen Teilnehmer (1 oder 2) der Umschalter (6, 7) den Fernsprechapparat (3, 4) an die Fernsprechleitung (36) legt und damit den Anschluß für den Sprechbetrieb freigibt, wenn in einem bestimmten Zeitintervall nach der Anwahl kein den Datenübertragungsbetrieb signalisierendes oder diesem zugeordnetes Steuersignal (Träger) vom Anrufenden (1 oder 2) anliegt.

2. Telefoneinrichtung nach Anspruch 1, dadurch gekennzeichnet, daß in dem Teilnehmerendgerät der Fernsprechapparat und die Wähleinrichtung mit integriert sind.

3. Telefoneinrichtung nach Anspruch 1 oder 2 in Verbindung mit einem Telefonapparat mit abnehmbarem Hörer und Gabelkontakt zur Leitungsfreischaltung, dadurch gekennzeichnet, daß mit dem Abheben des Hörers vom Gabelkontakt ein Schaltsignal ausgegeben wird, das den Umschalter (6, 7) derart steuert, daß der Fernsprechapparat (3, 4) an die Fernsprechleitung (36) angeschaltet wird, und daß nach Beendigung des Sprechbetriebes der Umschalter beim Auflegen des Hörers die Fernsprechleitung zwangsweise an das Datenübertragungsgerät (22) anschaltet.

4. Telefoneinrichtung nach Anspruch 3, dadurch gekennzeichnet, daß der Umschalter (6, 7) von dem beim Betätigen des Gabelkontaktes fließenden oder nicht fließenden Schleifenstromes bei freigegebener oder besetzter Fernsprechleitung gesteuert wird.

5. Telefoneinrichtung mit einem Teilnehmergerät nach einem der vorhergehenden Ansprüche mit einer oder mehreren Fernsprechleitungsschnittstellen (18), zum Anschluß an das öffentliche Fernsprechleitungsnetz in Verbindung mit einem mindestens eine Amtsleitung abschließenden Datenübertragungsgerät (11, 13) (Modem), für die Textkommunikation, wie Bildschirmtext, das zum einen serielle Gleichstrom-Binärsignale aus dem Teilnehmergerät in frequenzmodulierte NF-Signale und zum anderen von einer Bildschirmtextzentrale (16), oder einer anderen Datenbank, wie Rechner (17), ankommende frequenzmodulierte NF-Signale in von einer Decoderschaltung für die Textdarstellung abarbeitbare Binärsignale umwandelt, mit einer integrierten Wähleinrichtung für den automatischen Aufbau von digitalen Datenverbindungen mit einem Rufnummern- und Kennnummernspeicher und einem Schalter, der das Modem für den Duplexbetrieb nach dem automatischen Verbindungsaufbau durch Auslesen der Rufnummern und Kennnummernspeicher dann freischaltet, wenn die aufgebaute Verbindung durch ein die Betriebsart (Datenübertragung) kennzeichnendes Steuersignal von der angerufenen Stelle bestätigt ist und ein weiteres Steuersignal von dem anrufenden Teilnehmer ausgegeben wird (Modem DBT 03), dadurch gekennzeichnet, daß das die Amtsleitung abschließende Datenübertragungsgerät (11, 13) über seine teilnehmerseitig vorgesehenen Datensende- und Datenempfangs- und -steuerleitungseingänge mit den Datensende-, Datenempfangs- und -steuerleitungsausgängen eines als Abschluß der Sprechleitung vorgesehenen weiteren Datenübertragungsgerät (9, 10) verbunden ist, das nach dem Aufbau vom Teilnehmerendgerät zum die Amtsleitung abschließenden Datenübertragungsgerät (Modem) über die Steuerleitung das amtsseitig angeschlossene Datenanschlußgerät bei Ausgabe eines den beabsichtigten Datenübertragungsbetrieb kennzeichnenden Steuersignals (Träger) ansteuert, das seinerseits die Verbindung zur Bildschirmtextzentrale (16) bzw. zu einem externen Rechner (17) automatisch durch Ausgeben der gespeicherten Rufnummernimpulse selbsttätig anwählt und die Datenleitungen miteinander verbindet, sobald von der angewählten Datenstation ein die Datenübertragungs-Betriebsbereitschaft signalisierendes Steuersignal vorliegt.

6. Telefoneinrichtung nach Anspruch 5, dadurch gekennzeichnet, daß das zusätzliche Datenübertragungsgerät, welches dem amtsseitigen Modem vorgeschaltet ist, komplementär betreibbar ist und im Duplexbetrieb die anliegenden NF-modulierten Signale vom Teilnehmerendgerät in digitalcodierte umwandelt und über die Datensendeleitung ausgibt, wobei ein Steuersignal bei vorhandenem Träger über die Steuerleitung ebenfalls ausgegeben wird, und die über den Dateneingabeanschluß empfangenen, vom Modem digitalcodierten Daten in NF-modulierte umwandelt und an das Datenübertragungsgerät im Teilnehmerendgerät ausgibt.

7. Telefoneinrichtung nach Anspruch 6 oder 5, gekennzeichnet durch die Verwendung in Verbindung mit einer Telefonvermittlungsanlage, wie amts- und/oder nichtamtsberechtigte Nebenstellenanlage mit einer Hauptstelle und/oder gleichberechtigten Nebenstelle mit mindestens einem an einer hausinternen Telefonleitung der Nebensprechanlage angeschlossenen Teilnehmergerät, wobei das dem amtsleitungsseitig vorgesehenen Datenübertragungsgerät vorgeschaltete zusätzliche Datenübertragungsgerät hinter der Telefonvermittlungsstelle angeordnet ist.

8. Telefoneinrichtung nach Anspruch 7, dadurch gekennzeichnet, daß mehrere Amtsleitungsanschlüsse mit Datenübertragungsgeräteabschlüssen vorgesehen sind, und daß diesen Datenübertragungsgeräten jeweils ein weiteres Datenübertragungsgerät vorgeschaltet ist, das über die Telefonzentrale von den Teilnehmerendgeräten dann anrufbar ist, wenn die anzuwählende Verbindungsleitung frei ist.

9. Telefoneinrichtung nach einem der vorhergehenden Ansprüche, dadurch gekennzeichnet, daß der Textdecoder Schnittstellen aufweist, die den Anschluß an weitere Datenübertragungsgeräte und andere periphere Datenspeicher und Verarbeitungsgeräte ermöglichen (Modem D 1200 S), und daß diese Anschlüsse mit den entsprechenden, die Amtsleitung abschließenden Modems verbindbar sind.

10. Telefoneinrichtung nach einem der vorhergehenden Ansprüche, dadurch gekennzeichnet, daß das implementierte Datenübertragungsgerät über eine Interfaceschaltung an den Textdecoder anschließbar ist, und daß die Interface-Anschlüsse über einen Multiplexer wahlweise anschließbar sind.

11. Telefoneinrichtung nach Anspruch 10, dadurch gekennzeichnet, daß die Multiplexer in Abhängigkeit eines intern erzeugten Steuersignals synchron geschaltet werden.

**Claims**

1. Telephone equipment with a subscriber set (1, 2) for the interrogation of information, for the putting-in of replies and for the generation of communications of digitally coded kind for a technical text communication service, in which the text data modulated by a low-frequency carrier are transmitted by way of telephone lines (36), with one or more telephone terminals in connection with a telephone instrument (3, 4), by way of which telephone conversations are conductible in parallel with the text communications operation by way of further lines or in place of the text operation by way of a common line, characterised thereby, that a data transmission device (22) (modem) is implemented in the subscriber set (1 or 2) or is functionally connected with this and connected by way of at least one data transmission line (23), one data input line (24) and one control signal line (34) with a decoding circuit (31) for the preparation of the data for the visual representation or for the editing of texts, which decoding circuit (31) on the actuating of a function setter (35) delivers a control signal by way of the control signal line (34) for the preparation of the data transmission operation, which data transmission device (22) converts the digitally coded serial direct current binary signals into frequency-modulated low-frequency signals and issues them or converts frequency-modulated low-frequency signals, which arrive from an image screen text exchange (16) or either from another subscriber or from a data bank, such as external computers (17), into serial direct current binary signals processable by the decoder circuit (31) for the text representation,

that the data transmission device (22) is connected by way of a change-over switch (6) with the telephone line (36), by way of which a telephone instrument (3 or 4) is connectible by a dialling equipment for the establishment of a line connection or for the conduction of a telephone conversation, which change-over switch (6) connects the telephone line (36) with the telephone instrument (3) in dependence on a switching signal (S), which is put out by the dialling equipment at the latest on the emission of the dialling pulses, insofar as the speech line (36) is freed and neither a speech nor a data line connection exists,

that the switch (6) after the establishment of the connection is switchable over constrainedly by a control signal (carrier) dependent on the data operation and connects the data transmission device (22) with the telephone line (36),

that the switch setting of the switch (6) assumed during the data transmission remains maintained also after termination of the data transmission until the renewed establishment of a connecting line and that the change-over switch (6, 7) on a call by another subscriber (1 or 2) applies the telephone instrument (3, 4) to the telephone line (36) and thereby frees the connection for the speech operation when no control signal (carrier), which signals the data transmission operation or is associated therewith, from the caller (1 or 2) is present in a certain time interval after the dialling.

2. Telephone equipment according to claim 1, characterised thereby, that the telephone instrument and the dialling equipment are integrated in the subscriber end set.

3. Telephone equipment according to claim 1 or 2 in conjunction with a telephone instrument with removable earphone and cradle contact for the switching-free of the line, characterised thereby, that on the lifting of the earphone from the cradle contact, a switching signal is put out, which controls the change-over switch (6, 7) in such a manner that the telephone instrument (3, 4) is switched into the telephone line (36) and that, after termination of the speech operation, the change-over switch on the putting-down of the earphone switches the telephone line constrainedly onto the data transmission device (22).

4. Telephone equipment according to claim 3, characterised thereby, that the change-over switch (6, 7) is controlled by the loop current, which flows or does not flow on the actuation of the cradle contact when the telephone line is free or engaged.

5. Telephone equipment with a subscriber set according to one of the preceding claims with one or more telephone line interfaces (18) for connection to the public telephone line network in conjunction with a data transmission device (11, 13) (modem) terminating at least one exchange line for the text communication, such as image screen text, which for one thing converts serial direct current binary signals from the subscriber set into frequency-modulated low-frequency signals and for the other converts frequency-modulated low-frequency signals, which arrive from an image screen text exchange (16) or another data bank such as computer (17), into binary signals processable by a decoding circuit for the text representation, with an integrated dialling equipment for the automatic establishment of digital data connections with a subscriber's number and identification number store and a switch which switches the modem free for the duplex operation after the automatic establishment of the connection through reading-out of the subscriber's number and identification number store when the established connection is confirmed from the called station by a control signal characterising the mode of operation (data transmission) and a further control signal is put out by the calling subscriber (modem DBT 03), characterised thereby, that the data transmission device (11, 13) terminating the exchange line is connected by way of its data transmission line inputs and data reception line inputs and data control line inputs provided at the subscriber end with the data transmission line outputs, data reception line outputs and data control line outputs of a further data transmission device (10, 9), which is provided as termination of the speech line and which after the establishment from the subscriber end set to the data transmission device (modem) terminating the exchange line by way of the control line drives the data connection device connected at the exchange side on the issue of a control signal (carrier), which characterises the intended data transmission operation and in its turn dials the connection to the image screen text exchange (16) or to an external computer (17) automatically through issue of the stored subscriber's number pulses and connects the data lines one with the other as soon as a control signal signalling the readiness for data transmission operation by the dialled data station is present.

6. Telephone equipment according to claim 5, characterised thereby, that the additional data transmission device, which is connected in front of the modem at the exchange end, is operable complementary and in duplex operation converts the low-frequency-modulated signals present from the subscriber end set into digitally coded ones and issues them by way of the data transmission line, for which a control signal is likewise put out by way of the control line when the carrier is present, and converts the data, which have been digitally coded by the modem and received by way of the data input connection, into low-frequency-modulated ones and issues them to the data transmission device in the subscriber end set.

7. Telephone equipment according to claim 5 or 6, characterised by the use in conjunction with a telephone exchange installation, such as officially authorised and/or not officially authorised auxiliary exchange installation with a main station and/or equally authorised auxiliary station with at least one subscriber end set connected to an internal telephone line of the auxiliary exchange installation, wherein the additional data transmission device, which is connected in front of the data transmission device provided at the exchange line side, is arranged behind the telephone exchange station.

8. Telephone equipment according to claim 7, characterised thereby, that several exchange line terminals are provided with data transmission device terminals and that connected in front of these data transmission devices each time, there is a further data transmission device which is callable from the subscriber end sets by way of the telephone exchange when the connecting line to be dialled is free.

9. Telephone equipment according to one of the preceding claims, characterised thereby, that the text decoder displays interfaces which make possible the connection to further data transmission devices and other peripheral data stores and processing devices (modem D 1200 S), and that these terminals are connected with the corresponding modem terminating the exchange line.

10. Telephone equipment according to one of the preceding claims, characterised thereby, that the implemented data transmission device is connectible by way of an interface circuit to the text decoder and that the interface terminals are selectably connectible by way of a multiplexer.

11. Telephone equipment according to claim 10, characterised thereby, that the multiplexers are switched synchronously in dependence on an internally generated control signal.

**Revendications**

1. Installation de téléphone avec appareil d'abonné (1, 2) pour la demande d'informations, pour l'introduction de réponses et pour la production d'informations selon un mode à codage digital, destinée à un service téléphonique de communication de texte, avec lequel les données de texte modulées avec une porteuse NF, sont transmises au moyen de lignes téléphoniques (36), avec en outre un ou plusieurs branchements téléphoniques reliés à un poste de téléphone (3, 4) au moyen duquel des conversations téléphoniques peuvent être échangées parallèlement au service de communication de texte, au moyen d'une ligne commune, caractérisée en ce qu'il est<sup>/</sup>intégré dans l'appareil d'abonné (1, 2) ou relié fonctionnellement à un appareil de transmission de données (22) (Modem), qui est relié par au moins une ligne d'émission de données (23) – une ligne d'entrée de données (24) – et une ligne de signaux de commande (34) à un circuit décodeur (31) destiné à la mise en forme des données pour la représentation visuelle ou pour l'édition de texte, lequel circuit décodeur (31) émet pour la préparation du service de transmission de données un signal de commande destiné à l'actionnement d'un positionneur de fonction (35) par l'intermédiaire d'une ligne de signaux de commande (34), en ce que le dit appareil de transmission de données (22) convertit les signaux binaires de courant continu sériels à codage digital en signaux NF modulés en fréquence et émet ou convertit des signaux NF modulés en fréquence provenant d'une centrale de texte sur écran (16) ou d'un autre abonné, ou d'une banque de données, telle que des calculateurs extérieurs (17), en signaux binaires de courant continu sériels susceptibles d'être traités dans un circuit décodeur (31) pour la représentation de texte, en ce que l'appareil de transmission de données (22) est relié à la ligne téléphonique (36) au moyen d'un commutateur (6), par l'intermédiaire duquel un poste de téléphone (3 ou 4) peut être raccordé à un dispositif de sélection afin d'établir une connexion ou pour tenir une conversation téléphonique, lequel commutateur (6) relie, en fonction d'un signal de couplage (S) qui est émis au plus tard lors de l'émission des impulsions de sélection par le dispositif de sélection, la ligne téléphonique (36) au poste de téléphone (3), sous condition que la ligne téléphonique soit libre et que ni la ligne téléphonique, ni la ligne de transmission de données ne soit branchée,

en ce que l'interrupteur (6) peut subir après l'établissement de la liaison une commutation forcée au moyen d'un signal de commande (porteur) dépendant du service de données et relie l'appareil de transmission de données (22) à la ligne téléphonique (36),

en ce que la position de couplage adoptée par l'interrupteur (6) pendant la transmission de données reste maintenue après la fin de la transmission de données jusqu'à ce qu'un raccordement de ligne soit à nouveau établi et en ce que, lors de l'appel par un autre abonné (1, 2), le commutateur (6, 7) applique l'appareil de téléphone (3, 4) à la ligne de téléphone (36) et libère ainsi le branchement pour le service téléphonique, si après un intervalle de temps déterminé après la sélection, il n'est pas appliqué par l'appelant (1 ou 2) de signal de commande signalant le service de transmission de données ou rattaché à celui-ci.

2. Installation de téléphone selon la revendication 1, caractérisée en ce que l'appareil de téléphone et le dispositif de sélection sont intégrés dans l'appareil terminal d'abonné.

3. Installation de téléphone selon les revendications 1 ou 2, reliée à un poste de téléphone avec un écouteur décrochable et un contact à fourche pour la libération de la ligne, caractérisée en ce que lorsqu'on soulève l'écouteur du contact à fourche, il est émis un signal de couplage qui commande le commutateur (6, 7) de telle sorte que l'appareil de téléphone (3, 4) est branché sur la ligne téléphonique et que, après la fin de la conversation, le commutateur branche obligatoirement la ligne téléphonique sur l'appareil de transmission de données (22), lorsqu'on repose l'écouteur.

4. Installation de téléphone selon la revendication 3, caractérisée en ce que le commutateur (6, 7) est commandé par le courant en circuit fermé qui circule ou ne circule pas lorsqu'on actionne la fourche de contact, la ligne téléphonique étant libre ou occupée.

5. Installation de téléphone avec un appareil d'abonné selon une des revendications qui précèdent avec une ou plusieurs interfaces de lignes téléphoniques (18) pour le raccordement au réseau public de lignes téléphoniques, en liaison avec au moins un appareil de transmission de données (11, 13) terminant une ligne principale pour la communication de texte, telle qu'un texte d'écran, qui convertit d'une part des signaux binaires de courant continu sériels de l'appareil d'abonné en signaux NF modulés en fréquence et, d'autre part des signaux NF modulés en fréquence provenant d'une centrale de textes d'écrans (16) ou d'une autre banque de données, telle que des calculateurs (17), en signaux binaires susceptibles d'être mis en forme dans un circuit décodeur pour la représentation de texte, avec un dispositif de sélection intégré pour l'établissement automatique de liaisons de données digitales, avec une mémoire de numéros d'appel et des numéros d'identification et un interrupteur qui libère le Modem pour la transmission duplex après l'établissement automatique de la liaison au moyen d'une lecture dans la mémoire des numéros d'appel et des numéros d'identification, lorsque la liaison établie est confirmée par le poste appelé au moyen d'un signal de commande caractérisant le mode d'exploitation et qu'un autre signal de commande est émis par l'abonné appelant, caractérisée en ce que l'appareil de transmission de données (11, 13) terminant la ligne de service est relié par ses entrées d'émission de données – et de réception de données – et – de ligne de commande prévues du côté abonné aux sorties d'émission de données – de réception de données et de ligne de commande d'un autre appareil de transmission de données (10, 9) prévue comme terminaison de la ligne téléphonique, qui, après l'établissement par l'appareil terminal d'abonné d'une liaison avec l'appareil de transmission de données (Modem) terminant la ligne de service, sélectionne au moyen de la ligne de commande l'appareil de branchement de données raccordé du côté ligne de service à la sortie d'un signal de commande (porteur) caractérisant le service de transmission de données envisagé et qui, pour sa part, sélectionne automatiquement la liaison avec la centrale de texte d'écran (16) ou avec un calculateur extérieur (17) en émettant de lui-même les impulsions de numéros d'appel mémorisées et relie entre elles les lignes de données dès que se présente un signal émis par la station de données pour indiquer son état de disponibilité pour la transmission de données.

6. Installation de téléphone selon la revendication 5, caractérisée en ce que l'appareil de transmission de données supplémentaire qui est monté en série avec le Modem côté ligne de service, et en amont de celui-ci, peut être exploité complé- mentairement, convertit en signaux codés digitalement les signaux modulés NF adjacents de l'appareil terminal d'abonné et les émet au moyen de la ligne d'émission de données, alors qu'un signal de commande est également émis avec la porteuse existante au moyen de la ligne de commande, transforme en signaux modulés NF les données codées digitalement par le Modem qui sont reçues au moyen de la connexion d'entrée de données et les adresse à l'appareil de transmission de données dans l'appareil terminal d'abonné.

7. Installation de téléphone selon la revendication 6 ou 5, caractérisée par l'utilisation d'une installation de communication téléphonique, telle qu'une installation de postes secondaires officiellement agréés et/ou non officiellement agréés, avec un poste principal et/ou des postes secondaires disposant d'une même habilitation, avec au moins un appareil terminal d'abonné raccordé avec une ligne téléphonique interne, dans laquelle est disposé l'appareil de transmission de données supplémentaires derrière le poste de communication téléphonique, qui est monté en série avec l'appareil de transmission de données prévu du côté ligne de service.

8. Installation de téléphone selon la revendication 7, caractérisée en ce qu'il est prévu plusieurs raccordements de lignes de service avec des terminaisons d'appareils de transmission de données et en ce qu'il est respectivement monté en amont de ces appareils de transmission de données un autre appareil de transmission de données, qui peut être appelé par les appareils terminaux d'abonnés au moyen de la centrale téléphonique, si la ligne de raccordement à sélectionner est libre.

9. Installation de téléphone selon une des revendications qui précèdent, caractérisée en ce que le décodeur de texte présente des interfaces qui en permettent la connexion à d'autres appareils de transmission de données et à d'autres mémoires de données et appareils de traitement périphériques (Modem D 1200 S) et en ce que ces connexions sont réalisables au moyen des Modems correspondants qui terminent la ligne de service.

10. Installation de téléphone selon une des revendications qui précèdent, caractérisée en ce que l'appareil de transmission de données intégré peut être raccordé au décodeur de texte au moyen d'un montage à interface et en ce que les connexions d'interface sont raccordables à volonté au moyen d'un multiplexeur.

11. Installation de téléphone selon la revendication 10, caractérisée en ce que les multiplexeurs font l'objet d'un branchement synchrone en fonction d'un signal généré par voie interne.

Fig.1

Fig. 2

EP 0 148 406 B1

Fig. 3